# EUROPEAN PATENT APPLICATION

(11) **EP 4 685 493 A1**
(43) Date of publication of application: **28.01.2026**
(21) Application number: 23928796.4
(22) Date of filing: 18.12.2023
(51) Int. Cl.: G01N 35/10, G01N 35/02

(54) **PIERCING MECHANISM AND AUTOMATIC ANALYSIS DEVICE INCLUDING SAME**

(30) Priority: 23.03.2023 JP 2023046882
(71) Applicant: HITACHI HIGH-TECH CORPORATION, Tokyo 105-6409 (JP)
(72) Inventor: WADA, Kentaro, Tokyo 105-6409 (JP); TAKAYAMA, Hiroyuki, Tokyo 105-6409 (JP); SHIBUYA, Takeshi, Tokyo 105-6409 (JP)
(74) Representative: MERH-IP Matias Erny Reichl Hoffmann Patentanwälte PartG mbB
(86) International application number: PCT/JP2023/045333
(87) International publication number: WO 2024/195230

(57) **Abstract**

According to the invention, a cut can be formed in a desired position range of a lid of a reagent bottle even in a state in which a distal end of a needle holder approaches an edge portion of the lid from a center of a recess of the lid of the reagent bottle. A piercing mechanism includes: a needle; and a cylindrical needle holder configured to allow the needle to pass therethrough and hold the needle to be slidable in an axial direction. The needle holder is brought into contact with a reagent bottle put into an automatic analyzer, the needle is caused to protrude from the needle holder, and the needle pierces the reagent bottle to form a cut. The needle has, on an outer peripheral surface thereof, a protrusion that protrudes outward in a radial direction and that slides on an inner peripheral surface of the needle holder. The protrusion has a shape such that the protrusion is in point contact with the inner peripheral surface of the needle holder at a contact point when viewed in a cross section taken along a plane passing through a center line of the needle, and the needle is tiltable with respect to the needle holder.

## Description

### Technical Field

The present invention relates to an automatic analyzer for analyzing a liquid sample such as blood or urine, and a piercing mechanism to be used in the automatic analyzer.

### Background Art

There is an automatic analyzer equipped with a piercing mechanism for forming a cut for inserting a reagent probe into a lid of a reagent bottle. The piercing mechanism includes a needle, and is lowered to pierce the reagent bottle with the needle to form a cut in the lid. The cut formed in the lid of the reagent bottle is expanded by the inserted reagent probe at the time of reagent aspiration, but is closed in a state in which the reagent probe is not inserted before or after reagent aspiration. Accordingly, a time during which a reagent in the reagent bottle is exposed to outside air is reduced, deterioration in the reagent can be prevented, and an amount of the reagent filled in the reagent bottle can be increased. However, when a position of the cut formed by the piercing mechanism is shifted from a center of the lid of the reagent bottle beyond an allowable range due to component accuracy or the like, an insertion operation of the reagent probe during the reagent aspiration may be hindered.

In response to this, a piercing mechanism is proposed that has a mechanism that allows a needle holder, through which a needle moves in and out, to shift in a horizontal direction (PTL 1). According to the technique described in the PTL 1, even when the needle holder is lowered at a position shifted from the center of the reagent bottle, the needle holder is guided to a mortar-shaped recess formed on an upper surface of the lid in the course of a lowering operation, and is shifted in the horizontal direction to be aligned. When the needle protrudes from the needle holder aligned in this manner, the cut is accurately formed at the center of the lid.

### Citation List

### Patent Literature

PTL 1: WO 2017/141696

### Summary of Invention

### Technical Problem

However, also in the piercing mechanism of PTL 1, when a lowered position of the needle holder is excessively shifted with respect to the reagent bottle and a distal end of the needle holder is not inserted into the recess of the lid and gets caught on the upper surface of the lid, the needle holder is not shifted and an alignment mechanism may not function.

An object of the invention is to provide a piercing mechanism capable of forming a cut in a desired position range of a lid of a reagent bottle even in a state in which a distal end of a needle holder approaches an edge portion of the lid from a recess of the lid of the reagent bottle, and an automatic analyzer including the piercing mechanism.

### Solution to Problem

In order to achieve the above object, the invention provides a piercing mechanism including: a needle; and a cylindrical needle holder configured to allow the needle to pass therethrough and hold the needle to be slidable in an axial direction. The needle holder is brought into contact with a reagent bottle put into an automatic analyzer, the needle is caused to protrude from the needle holder, and the needle pierces the reagent bottle to form a cut. The needle has, on an outer peripheral surface thereof, a protrusion that protrudes outward in a radial direction and that slides on an inner peripheral surface of the needle holder. The protrusion has a shape such that the protrusion is in point contact with the inner peripheral surface of the needle holder at a contact point when viewed in a cross section taken along a plane passing through a center line of the needle, and the needle is tiltable with respect to the needle holder.

### Advantageous Effects of Invention

According to the invention, a cut can be formed in a desired position range of a lid of the reagent bottle even in a state in which a distal end of a needle holder approaches an edge portion of the lid from a recess of the lid of the reagent bottle.

### Brief Description of Drawings

[FIG. 1] FIG. 1 is a schematic view of an automatic analyzer according to an embodiment of the invention.
[FIG. 2] FIG. 2 is a schematic view showing a configuration of a reagent autoloader mechanism provided in the automatic analyzer according to the embodiment of the invention.
[FIG. 3] FIG. 3 is a diagram showing a state of an insertion operation of a reagent probe into a reagent bottle when a cut is formed in a center of a lid of the reagent bottle.
[FIG. 4] FIG. 4 is a diagram showing a state of the insertion operation of the reagent probe into the reagent bottle when the cut is formed in the center of the lid of the reagent bottle.
[FIG. 5] FIG. 5 is a diagram showing a state of the insertion operation of the reagent probe into the reagent bottle when the cut is formed at a position shifted from the center of the lid of the reagent bottle.
[FIG. 6] FIG. 6 is a diagram showing a state of the insertion operation of the reagent probe into the reagent bottle when the cut is formed at the position shifted from the center of the lid of the reagent bottle.
[FIG. 7] FIG. 7 is a diagram showing a configuration for raising and lowering a piercing mechanism in the automatic analyzer according to the embodiment of the invention.
[FIG. 8] FIG. 8 is a schematic view of the piercing mechanism provided in the automatic analyzer according to the embodiment of the invention.
[FIG. 9] FIG. 9 is a cross-sectional view including a central axis of an assembly of a needle holder and a needle provided in the automatic analyzer according to the embodiment of the invention.
[FIG. 10] FIG. 10 is a perspective cross-sectional view of a main part of the assembly of the needle holder and the needle provided in the automatic analyzer according to the embodiment of the invention.
[FIG. 11] FIG. 11 is an enlarged view of a portion A in FIG. 9.
[FIG. 12] FIG. 12 is a diagram illustrating a state in which a tilt mechanism of the needle provided in the automatic analyzer according to the embodiment of the invention functions.
[FIG. 13] FIG. 13 is a diagram illustrating the state in which the tilt mechanism of the needle provided in the automatic analyzer according to the embodiment of the invention functions.
[FIG. 14] FIG. 14 is a schematic view showing a main part of a first modification of the needle provided in the automatic analyzer according to the embodiment of the invention.
[FIG. 15] FIG. 15 is a schematic view showing a main part of a second modification of the needle provided in the automatic analyzer according to the embodiment of the invention.
[FIG. 16] FIG. 16 is a schematic view showing a main part of a third modification of the needle provided in the automatic analyzer according to the embodiment of the invention.
[FIG. 17] FIG. 17 is a schematic view showing a main part of a fourth modification of the needle provided in the automatic analyzer according to the embodiment of the invention.
[FIG. 18] FIG. 18 is a schematic view showing a main part of a fifth modification of the needle provided in the automatic analyzer according to the embodiment of the invention.
[FIG. 19] FIG. 19 is a perspective cross-sectional view of a main part of an assembly of a needle holder and a needle according to a comparative example.

### Description of Embodiments

Hereinafter, an embodiment of the invention will be described with reference to the drawings.

### -Automatic Analyzer-

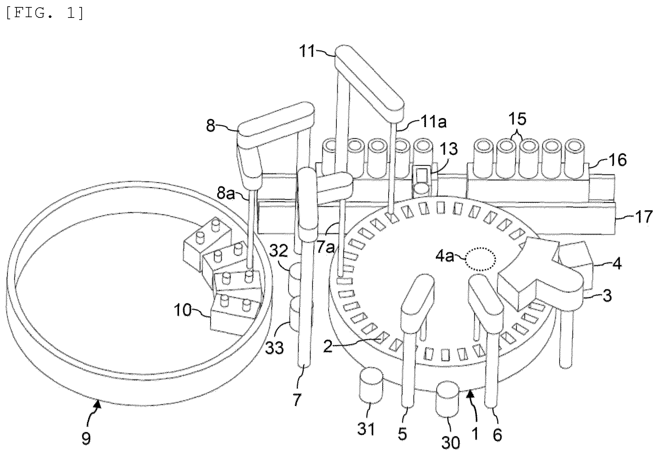

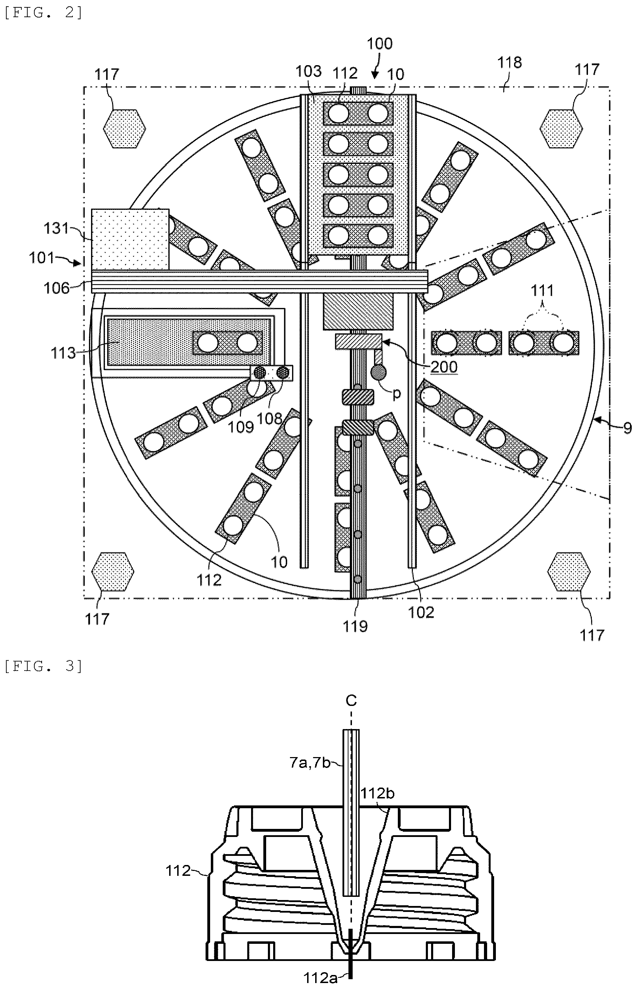

FIG. 1 is a schematic view of an automatic analyzer according to an embodiment of the invention. The automatic analyzer shown in FIG. 1 is a device for analyzing a specimen by individually dispensing a specimen, which is a biological sample such as blood or urine, and a reagent into a reaction cell (reaction container) 2, reacting the sample and the reagent, and measuring components of a reaction solution of the sample and the reagent. The automatic analyzer includes a reaction disk 1, a reagent storage cabinet (reagent disk) 9, a sample transport line (sample transport mechanism) 17, reagent dispensing mechanisms 7 and 8, a sample dispensing mechanism 11, a cleaning mechanism 3, a light source 4a, a spectrophotometer 4, a stirring mechanism 5 and 6, cleaning tanks 13, 30, 31, 32, and 33, and a reagent autoloader mechanism 100 (FIG. 2).

A plurality of reaction cells 2 are circumferentially arranged on the reaction disk 1. A sample transport line 17 for transporting a rack 16 on which a sample container 15 is placed is installed near the reaction disk 1.

The sample dispensing mechanism 11 capable of rotating in a horizontal direction and translating in an up-down direction is installed between the reaction disk 1 and the sample transport line 17. The sample dispensing mechanism 11 includes a sample probe 11a. A sample syringe (not shown) is connected to the sample probe 11a. The sample probe 11a moves up and down while moving between the sample container 15 and the reaction cell 2 along an arc trajectory around a rotation axis of the sample dispensing mechanism 11, and dispenses the sample from the sample container 15 into the reaction cell 2.

In the reagent storage cabinet 9, a plurality of reagent bottles (reagent cassettes) 10 are stored along in a circumferential shape on the disk. As the disk rotates, the reagent bottle 10 rotates inside the reagent storage cabinet 9. The inside of the reagent storage cabinet 9 is kept cold and covered with a cover having an aspiration cassette (aspiration port) 111 (FIG. 2).

The reagent dispensing mechanisms 7 and 8 capable of rotating and moving up and down like the sample dispensing mechanism 11 is installed between the reaction disk 1 and the reagent storage cabinet 9. The reagent dispensing mechanisms 7 and 8 includes reagent probes 7a and 8a. Reagent syringes (not shown) are connected to the reagent probes 7a and 8a. The reagent probes 7a and 8a move up and down while moving between the aspiration cassette 111 and the reaction cell 2 while drawing an arc trajectory around each rotation axis of the reagent dispensing mechanisms 7 and 8, access the inside of the reagent storage cabinet 9 from the aspiration cassette 111, and dispense the reagent from the reagent bottle 10 to the reaction cell 2.

Around the reaction disk 1, the cleaning mechanism 3, the light source 4a, the spectrophotometer 4, and the stirring mechanisms 5 and 6 are further disposed. A cleaning pump (not shown) is connected to the cleaning mechanism 3. The cleaning tanks 32, 33, 13, 30, and 31 are installed on a flow line of each of the reagent dispensing mechanisms 7 and 8, the sample dispensing mechanism 11, and the stirring mechanisms 5 and 6. The sample container 15 contains a sample, which is placed on the rack 16 and transported by the sample transport line 17.

The sample transport line 17, the reaction disk 1, the reagent storage cabinet 9, the cleaning mechanism 3, the light source 4a, the spectrophotometer 4, the stirring mechanisms 5 and 6, and the reagent autoloader mechanism 100 are electrically connected to a controller (not shown). The controller includes a computer and the like, executes operation control of each device mounted on the automatic analyzer, and executes calculation processing for obtaining a concentration of a predetermined component in the sample.

### -Analysis Processing-

In analysis processing of a test sample performed by the automatic analyzer having the above configuration, first, the rack 16 on which the sample container 15 is mounted is transported near the reaction disk 1 (operation range of the sample probe 11a) by the sample transport line 17. The sample in the sample container 15 mounted on the rack 16 is aspirated into the sample probe 11a by the sample dispensing mechanism 11, transported onto the reaction disk 1, and dispensed into the reaction cell 2.

Next, the reagent bottle 10 containing the reagent to be used for analysis of the sample is transported to the operation range of the reagent probe 7a or 8a inside the reagent storage cabinet 9. The reagent inside the reagent bottle 10 is aspirated by the reagent probe 7a or 8a by the reagent dispensing mechanism 7 or 8, transported onto the reaction disk 1, and dispensed into the reaction cell 2 containing the sample. A mixed liquid of the sample and the reagent dispensed into the same reaction cell 2 is stirred by the stirring mechanism 5.

Thereafter, the reaction cell 2 containing the mixed liquid after stirring is irradiated with light from the light source 4a, and a luminous intensity of the transmitted light from the reaction cell 2 is measured by the spectrophotometer 4. The luminous intensity measured by the spectrophotometer 4 is converted into a digital signal by an A/D converter (not shown) and transmitted from the spectrophotometer 4 to the controller via an interface. In the controller, the concentration of the predetermined component in the sample is calculated based on a measurement value input from the spectrophotometer 4, and a calculation result is displayed on a display device (not shown) or recorded in a storage unit (not shown) as an analysis result.

### -Reagent Autoloader Mechanism-

FIG. 2 is a schematic view showing a configuration of the reagent autoloader mechanism 100. The reagent probes 7a and 7b are inserted into an opening of the reagent bottle 10 to aspirate the reagent, and a lid 112 is attached to the opening of the reagent bottle 10 to seal the inside. In the present embodiment, when the reagent bottle 10 is set in the automatic analyzer, cuts for inserting the reagent probes 7a and 7b are formed in the lid 112 of the reagent bottle 10. Since the cut formed in the lid 112 is small and closed in a state in which the reagent probes 7a and 7b are not inserted, contact between the reagent inside the reagent bottle 10 and the outside air is prevented, and deterioration of the reagent is prevented. For example, when an operator places an unopened new reagent bottle 10 in the automatic analyzer and performs a predetermined operation, a cut is formed in the lid 112 of the reagent bottle 10 and the reagent bottle 10 is automatically stored in the reagent storage cabinet 9. The reagent autoloader mechanism 100 opens the reagent bottle 10 and transports the reagent bottle 10 to the reagent storage cabinet 9.

The reagent autoloader mechanism 100 is disposed in an upper part of the reagent storage cabinet 9 as shown in FIG. 2. The reagent autoloader mechanism 100 includes a reagent tray 103, a tray rail 102, a reagent transport mechanism 101, a needle cleaning tank 108, a needle drying port 109, a support column 117, and a metal plate 118. Each mechanism such as the reagent tray 103, the tray rail 102, the reagent transport mechanism 101, the needle cleaning tank 108, and the needle drying port 109 is attached to one metal plate 118.

The reagent tray 103 is a portion where the operator sets the reagent bottle 10 when the reagent bottle 10 is put into the automatic analyzer. The reagent tray 103 is guided by the tray rail 102 and moves in the up-down direction in FIG. 2 along a linear rail 119. The operation range of the reagent tray 103 is limited to a range overlapping the metal plate 118 in a plan view so that the reagent autoloader mechanism 100 is accommodated in the automatic analyzer. Bottle slots (not shown) for installing a plurality of reagent bottles 10 are linearly disposed in the reagent tray 103, and the reagent bottles 10 are set in these bottle slots, respectively.

The reagent transport mechanism 101 is a mechanism that transports the reagent bottles 10 installed in the reagent tray 103 into the reagent storage cabinet 9. The reagent transport mechanism 101 includes a reagent bottle gripping mechanism (not shown) that grips the reagent bottles 10 and a piercing mechanism (reagent bottle opening portion) 200 that forms a cut in the lid 112 of the reagent bottle 10.

The reagent bottle gripping mechanism moves along a fixing frame 106 extending in a direction (left-right direction in FIG. 2) orthogonal to the tray rail 102, and moves between the reagent tray 103 and a reagent slot 113. The fixing frame 106 is supported by a base 131. The reagent bottle gripping mechanism includes a claw (not shown) for gripping the reagent bottle 10, and the reagent bottle gripping mechanism grips the reagent bottle 10 by hooking the claw on the reagent bottle 10. On an operation line of the reagent bottle gripping mechanism, a first position for gripping the reagent bottle 10 on the reagent tray 103 and a second position for carrying the reagent bottle 10 into and out of the reagent storage cabinet 9 via the reagent slot 113 are set. The reagent slot 113 is an opening and closing cover for preventing an outflow of cold air inside the cooled reagent storage cabinet 9, and is normally closed except when the reagent bottle 10 is carried into and out of the reagent storage cabinet 9. When the reagent bottle gripping mechanism accesses the reagent storage cabinet 9, the reagent slot 113 is opened, and the reagent bottle 10 is carried into and out of the reagent storage cabinet 9.

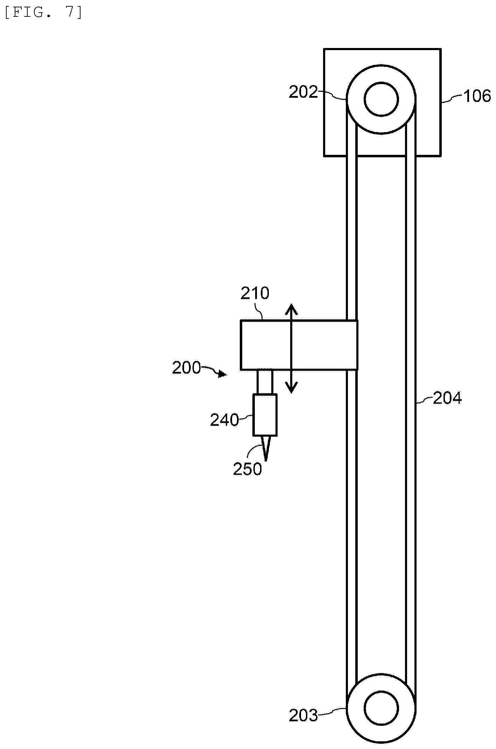

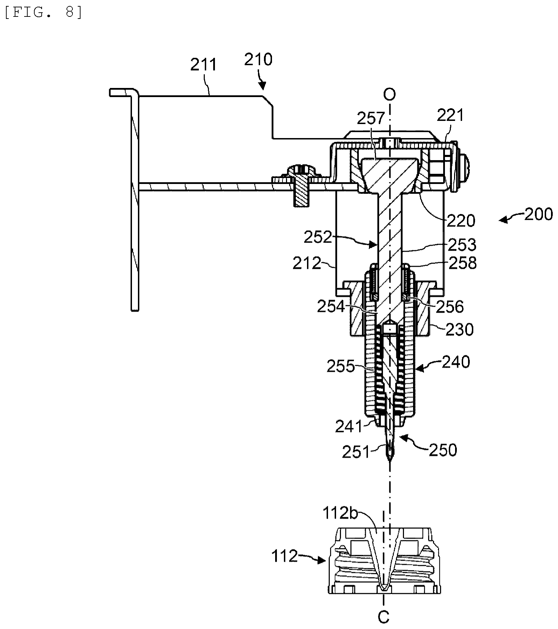

The piercing mechanism 200 moves along the fixing frame 106 together with the reagent transport mechanism. A needle 250 (FIG. 7) for forming a cut in the lid 112 of the reagent bottle 10 is attached to the piercing mechanism 200. The needle cleaning tank 108 and the needle drying port 109 are disposed on the operation line of the piercing mechanism 200. During an opening operation of the reagent bottle 10, a distal end portion (piercing needle 251) (FIG. 8) of the needle 250 inserted into the reagent bottle 10 to form a cut in the lid 112 is cleaned with cleaning water in the needle cleaning tank 108, and then the cleaning water is removed in the needle drying port 109. Accordingly, even when the same needle 250 is used to open the plurality of reagent bottles 10, the distal end of the needle 250 is kept clean, and the reagent is prevented from being diluted by the cleaning water brought into the reagent bottle 10.

### -Carrying of Reagent Bottle-

An operation of carrying the reagent bottle 10 into the reagent storage cabinet 9 by the reagent autoloader mechanism 100 having the above configuration will be described. The following operation is implemented by the controller controlling each mechanism.

When carrying the reagent bottle 10 into the reagent storage cabinet 9, the operator first performs a first operation of a button switch (not shown) of the automatic analyzer. When the first operation of the button switch is recognized by the controller, the reagent tray 103 moves from a standby position to an input position of the reagent bottle 10 (for example, the lower side in FIG. 2) along the tray rail 102 under the control of the controller.

Subsequently, the operator sets the reagent bottle 10 in the reagent tray 103 that arrives at the input position, and performs a second operation of the button switch. When the second operation of the button switch is recognized by the controller, the reagent tray 103 is moved to a piercing position p below the needle 250 of the piercing mechanism 200 under the control of the controller. When the reagent tray 103 arrives at the piercing position p, the piercing mechanism 200 is lowered, the needle 250 is inserted into the lid 112 of the reagent bottle 10, and a cut is formed in the lid 112. The needle 250 which has formed a cut in the lid 112 of the reagent bottle 10 is pulled out from the reagent bottle 10 by raising the piercing mechanism 200. Thereafter, the piercing mechanism 200 sequentially moves to the needle cleaning tank 108 and the needle drying port 109 along the fixing frame 106, and the needle 250 is cleaned and dried.

After the needle 250 is dried, the reagent tray 103 is moved along the tray rail 102, and the reagent bottle 10 cut in the lid 112 is moved to a position below the reagent bottle gripping mechanism. Thereafter, the reagent bottle gripping mechanism is lowered to grip the reagent bottle 10 and then raised to open the reagent slot 113. The reagent gripping mechanism moves above the reagent slot 113, the disk inside the reagent storage cabinet 9 rotates, and an empty position on the disk moves below the reagent slot 113. The reagent bottle 10 is lowered together with the reagent holding mechanism and is carried into the reagent storage cabinet 9 via the reagent slot 113. After the reagent bottle 10 is carried into the reagent storage cabinet 9, the reagent bottle gripping mechanism returns to a position above the reagent tray 103.

The above operation is repeated for all the reagent bottles 10 on the reagent tray 103 to be carried into the reagent storage cabinet 9. When the carrying of all the reagent bottles 10 to be carried into the reagent storage cabinet 9 is completed, the reagent slot 113 is closed.

### -Carrying out of Reagent Bottle-

Among the reagent bottles 10 installed inside the reagent storage cabinet 9, the empty reagent bottle 10 is carried out from the reagent storage cabinet 9. A timing of carrying out the reagent bottle 10 is, for example, between reagent dispensing operations by the reagent dispensing mechanisms 7 and 8, during analysis of a sample, or after output of an analysis result. The following operation is also implemented by the controller controlling each mechanism.

When the reagent bottle 10 is carried out, first, the reagent slot 113 is opened, and the reagent bottle gripping mechanism moves to a position of the reagent slot 113 inside the reagent storage cabinet 9. Next, the reagent bottle gripping mechanism accesses the inside of the reagent storage cabinet 9 via the reagent slot 113 and grips the empty reagent bottle 10. In parallel with this, the reagent tray 103 moves from the standby position so that an empty reagent bottle slot of the reagent tray 103 is positioned below the trajectory of the reagent bottle gripping mechanism.

Next, the reagent bottle gripping mechanism gripping the empty reagent bottle 10 moves to above the reagent tray 103, and the reagent slot 113 is closed. Thereafter, the reagent bottle gripping mechanism is lowered, the empty reagent bottle 10 is placed in the empty reagent bottle slot of the reagent tray 103, and the reagent tray 103 on which the empty reagent bottle 10 is placed returns to the standby position. When the reagent tray 103 returns to the standby position, the operator is notified that the empty reagent bottle 10 can be taken out from the automatic analyzer.

### -Example of Opening Reagent Bottle-

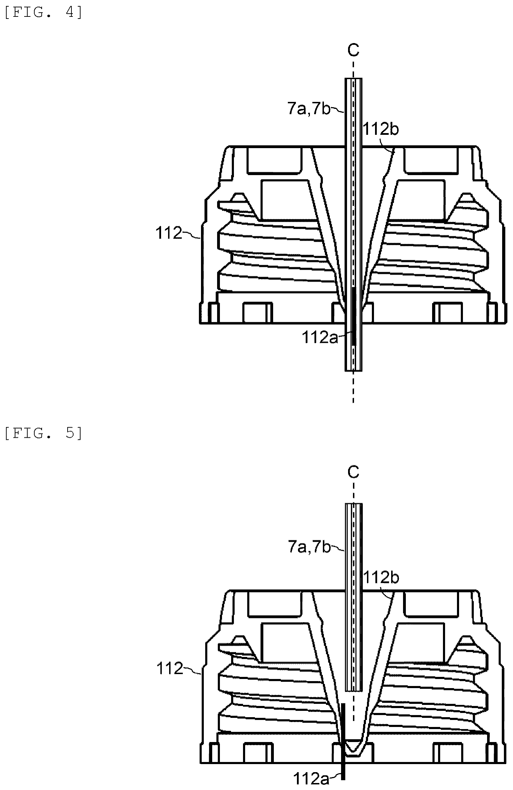

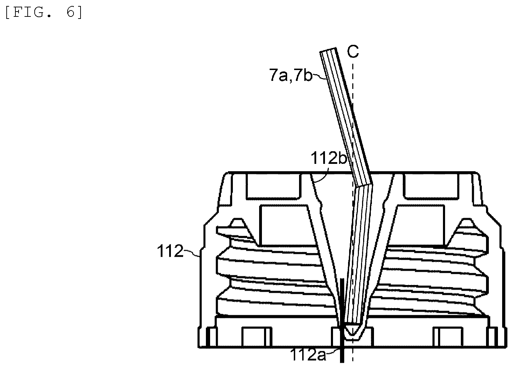

The cuts into which the reagent probes 7a and 8a are inserted need to be formed at the center of the lid 112 of the reagent bottle 10. The reason will be described with reference to FIGS. 3 to 6. FIGS. 3 and 4 are diagrams showing a state of the insertion operation of the reagent probe into the reagent bottle in a case in which a cut is formed at the center of the lid of the reagent bottle. FIGS. 5 and 6 are diagrams showing a state of the insertion operation of the reagent probe into the reagent bottle when a cut is formed at a position shifted from the center of the lid of the reagent bottle.

In the process of the analysis operation performed by the automatic analyzer, the operation of inserting the reagent probes 7a and 8a into the lid 112 is required to be quick. As shown in FIG. 3, a mortar-shaped (conical) recess 112b is provided on the upper surface of the lid 112 of the reagent bottle 10. A center line C of the recess 112b coincides with the center lines of the reagent bottle 10 and the lid 112, and is vertical when the reagent bottle 10 is placed on the reagent tray 103. If a cut 112a is formed at the center of the lid 112 (if a positional deviation of the cut 112a from the center line C is within an allowable range), the reagent probes 7a and 7b which are lowered along the center line C are normally inserted into the cut 112a as shown in FIG. 4.

On the other hand, as shown in FIG. 5, the position of the cut 112a with respect to the center line C is shifted beyond the allowable range, and the cut 112a may not be formed at the bottom of the recess 112b. In this case, the reagent probes 7a and 7b which are lowered along the center line C are brought into contact with the lid 112 at the distal end of the reagent probe 8a on the bottom of the recess 112b as shown in FIG. 6, and the reagent probes 7a and 8a may be bent in a severe case. In particular, the thin reagent probes 7a and 8a having a diameter of about 1 mm may be employed in the automatic analyzer, and a buckling strength of the reagent probes 7a and 8a is often insufficient. In order to repeatedly use the reagent probes 7a and 8a for a long period of time, it is important to accurately form the cut 112a for inserting the reagent probes 7a and 8a at the center of the lid 112.

### -Piercing Mechanism-

In the present embodiment, the piercing mechanism 200 includes a mechanism for accurately forming the cut 112a into the center of the lid 112. One of the mechanisms is an alignment mechanism of the needle holder 240 (FIG. 7), and the other is a tilt mechanism of the needle 250 (FIG. 7). The alignment mechanism is a mechanism that allows the needle 250 to shift in the horizontal direction and aligns the needle 250 by being guided by the recess 112b of the lid 112 in a case in which the needle 250 is shifted from the center line C of the lid 112 when the piercing mechanism 200 is lowered to insert the needle into the lid 112 at the time of opening the reagent bottle 10. The tilt mechanism of the needle 250 is a mechanism that guides the needle distal end to the center of the lid 112 (the bottom of the recess 112b) by allowing the needle 250 to tilt even in a situation in which the needle 250 is not sufficiently aligned.

FIG. 7 is a diagram showing a drive device for raising and lowering the piercing mechanism 200. The drive device of the piercing mechanism 200 shown in FIG. 7 includes a pulley 202 driven by a motor (not shown), a pulley 203 provided in pair with the pulley 202, and a belt 204 wound around the pulleys 202 and 203. The pulley 202 is rotatably supported by the fixing frame 106, and the pulley 203 is rotatably supported by a support member (not shown) whose relative position to the fixing frame 106 does not change. The piercing mechanism 200 is coupled to the belt 204, and when the motor is driven in response to a command signal from the controller, the belt 204 is driven to circulate between the pulleys 202 and 203, and accordingly, the piercing mechanism 200 moves up and down in parallel. A driving or driven relationship of the pulleys 202 and 203 may be reversed. The configuration is not limited to the configuration using the pulleys 202 and 203, and a raising and lowering mechanism of the piercing mechanism 200 can be appropriately employed as long as the configuration can raise and lower the piercing mechanism 200, such as a configuration that employs a ball screw or a spline shaft.

### -Alignment Mechanism-

FIG. 8 is a schematic view of the piercing mechanism 200. As shown in FIG. 8, the piercing mechanism 200 includes a frame 210, a guide 220, a guard 230, the needle holder 240, and the needle 250.

The frame 210 is a base structure of the piercing mechanism 200, and is formed in an L shape by an arm portion 211 extending in the horizontal direction and a support portion 212 extending in the up-down direction. The arm portion 211 is fixed to the belt 204, and the support portion 212 extends downward from the arm portion 211.

The guide 220 is a member that supports the needle 250 with respect to the frame 210, and is fixed to the arm portion 211 of the frame 210. The guide 220 is a cylindrical member having a conical inner peripheral surface whose diameter decreases downward. A lower opening of the guide 220 is opened, and an upper opening thereof is covered by a pressing plate 221. The pressing plate 221 is fixed to the arm portion 211 by bolts or the like.

The guard 230 is a member that defines an allowable range of horizontal movement of the needle 250 with respect to the frame 210, and is fixed to the support portion 212 of the frame 210. The guard 230 is a cylindrical member whose center line extends in the up-down direction. Upper and lower openings of the guard 230 are open.

The needle holder 240 is a tubular member that passes the needle 250 inside and holds the needle 250 to be slidable in an axial direction (up-down direction). An outer peripheral surface of a distal end portion 241 (lower end portion) of the needle holder 240 has an outer diameter that is smaller in a stepped manner than a main body portion above the distal end portion 241, and has a conical shape whose diameter decreases downward. The outer diameter of the needle holder 240 is smaller than an inner diameter of the guard 230, and a gap of a predetermined dimension is secured between an outer peripheral surface of the needle holder 240 and an inner peripheral surface of the guard 230. In the range of the gap, the shift of the needle holder 240 and the needle 250 in the horizontal direction with respect to the guard 230 is allowed as described above.

The needle 250 is a member that opens the lid 112 of the reagent bottle 10, and includes the piercing needle 251 and a piercing holder 252. However, the needle 250 may not have a structure divided into the piercing needle 251 and the piercing holder 252, and may have an integrally molded structure.

The piercing needle 251 is a member that is inserted into the lid 112 to form the cut 112a (FIG. 3) in the lid 112. The distal end of the needle 250, that is, the lower end of the piercing needle 251, is sharply formed to be inserted into the lid 112. An outer diameter of the piercing needle 251 is smaller than an inner diameter of the needle holder 240, and a gap of a predetermined dimension is secured between an outer peripheral surface of the piercing needle 251 and an inner peripheral surface of the needle holder 240.

The piercing holder 252 is a member that holds the piercing needle 251, engages with the guide 220, and slides with respect to the needle holder 240. The outer peripheral surface of the piercing holder 252 is provided with a protrusion 254 that protrudes outward in the radial direction with respect to a shaft-shaped main body portion 253, and the piercing holder 252 and thus the needle 250 slide on the inner peripheral surface of the needle holder 240 by the protrusion 254. The piercing needle 251 is inserted and fitted into a distal end surface (downward end surface) of the protrusion 254. The protrusion 254 is positioned on the distal end side (lower side) of the main body portion 253 of the piercing holder 252.

Coil springs 255 are accommodated in a cylindrical gap between the outer peripheral surface of the piercing needle 251 and the inner peripheral surface of the needle holder 240. The end surface on the distal end side (lower side) of the protrusion 254 receives a restoring force in an extension direction of the coil spring 255, and accordingly, the needle 250 is pushed toward a base end side (upper side) of the needle 250, that is, in a direction in which the needle 250 is retracted with respect to the needle holder 240. In addition, a washer 256 as a pressing member is mounted on an upper portion of the inner peripheral surface of the needle holder 240, and an end surface on the base end side (upper side) of the protrusion 254 is brought into contact with the washer 256 to define an upper limit position of a sliding range of the needle 250 with respect to the needle holder 240. The washer 256 may be replaced with another type of pressing member. As a fixing member 258 for fixing the washer 256, for example, a metal nut can be used, and in the present embodiment, rubber (rubber plug) is employed in consideration of attachability and detachability at the time of cleaning for generating abrasion powder.

The main body portion 253 of the piercing holder 252 protrudes upward from the needle holder 240. A base portion (upper end portion) 257 having a diameter larger than that of the main body portion 253 is provided above the main body portion 253. A base portion of the piercing holder 252 (that is, a base portion of the needle 250) is accommodated in a space surrounded by an inner peripheral surface of the guide 220 and the pressing plate 221, and the needle 250 protrudes downward from the guide 220 through a lower opening of the guide 220. The large-diameter base portion 257 of the needle 250 gets caught on the inner peripheral surface of the guide 220 narrowed downward, and the needle 250 is suspended from the guide 220 without falling off from the guide 220. In the present embodiment, the outer peripheral surface of the base portion 257 is also a tapered surface corresponding to the inner peripheral surface of the guide 220, and is not limited thereto. The diameter of the lower opening of the guide 220 is smaller than the diameter of the base portion 257 of the needle 250 and smaller than the outer diameter of the needle holder 240. Therefore, at the time of maintenance or the like, the pressing plate 221 can be removed, and the needle 250 can be pulled out upward together with the needle holder 240 via the guide 220.

When the reagent bottle 10 is opened, the piercing mechanism 200 having the above configuration is lowered by the belt 204, the distal end portion 241 of the needle holder 240 enters the recess 112b of the lid 112 of the reagent bottle 10, and the needle holder 240 is brought into contact with the lid 112. The piercing mechanism 200 is further lowered, and the base portion 257 of the needle 250, which is stationary together with the needle holder 240 in contact with the lid 112, is pushed downward by the pressing plate 221. Accordingly, the needle 250 is pushed downward from the needle holder 240 against the restoring force of the coil spring 255, the needle 250 is inserted into the lid 112, the needle 250 penetrates the lid 112, and the reagent bottle 10 is opened. In this way, using the piercing mechanism 200, the needle holder 240 is brought into contact with the reagent bottle 10 put into the automatic analyzer and carried into the reagent storage cabinet 9, the needle 250 is caused to protrude from the needle holder 240, the needle 250 pierces the reagent bottle to form the cut 112a in the lid 112 of the reagent bottle 10, and the reagent bottle 10 is opened.

At this time, if the center line O of the lowered needle holder 240 coincides with the center line C of the lid 112 of the reagent bottle 10, the distal end of the needle 250 naturally pierces the bottom of the recess 112b of the lid 112 of the reagent bottle 10, and the cut 112a is formed at the center of the lid 112. Even if the center lines O and C are misaligned for some reason, if the distal end portion 241 of the needle holder 240 does not come off the recess 112b of the lid 112, the distal end portion 241 is guided by the tapered surface of the recess 112b, a base portion 257 of the needle 250 moves in the space surrounded by the inner peripheral surface of the guide 220 and the pressing plate 221, and the needle holder 240 shifts in the horizontal direction within the range of a gap between the guard 230 and the needle holder 240. Accordingly, the center line O of the needle holder 240 coincides with or approaches the center line C of the lid 112, and the cut 112a is formed at the center position of the lid 112 or a position within an allowable error range from the center. The mechanism that allows the needle holder 240 and the needle 250 to shift is the alignment mechanism of the needle holder 240.

After the reagent bottle 10 is opened, the piercing mechanism 200 is raised, and the needle 250 is pulled out from the lid 112. At this time, even when the alignment mechanism functions to shift the needle 250 when the reagent bottle 10 is opened, the needle 250 is removed from the lid 112, so that the base portion 257 is guided by the guide 220. Accordingly, the needle holder 240 naturally returns to a position where the center line O coincides with the center of the guide 220.

### -Tilt Mechanism-

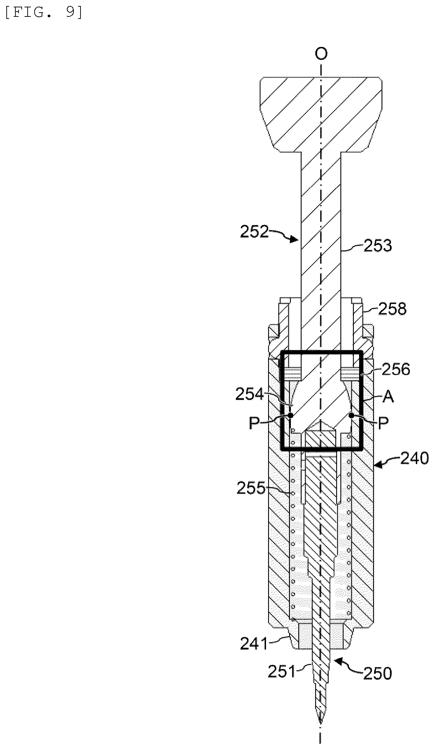

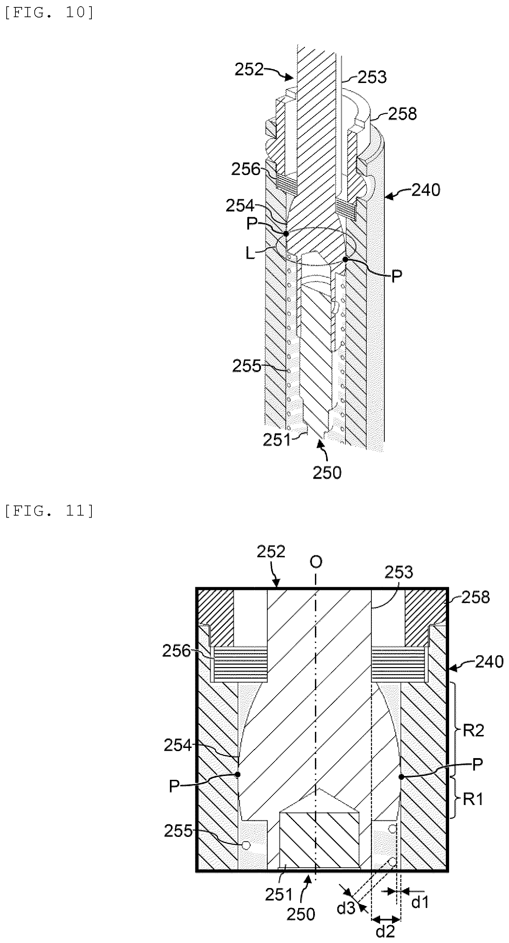

FIG. 9 is a cross-sectional view including a central axis of an assembly of the needle holder 240 and the needle 250, FIG. 10 is a perspective cross-sectional view of a main part of the assembly of the needle holder 240 and the needle 250, and FIG. 11 is an enlarged view of a portion A in FIG. 9.

As shown in FIGS. 9 to 11, in the present embodiment, the protrusion 254 of the needle 250 has a shape that is in point contact with the inner peripheral surface of the needle holder 240 at a contact point P in a state in which the center line of the protrusion 254 coincides with the center line of the needle holder 240 when viewed in a cross section cut along a plane passing through the center line O of the needle holder 240. Therefore, the needle 250 is tiltable with respect to the needle holder 240 within a range of a gap between the needle 250 and the inner peripheral surface of the needle holder 240. As described above, the mechanism that allows the tilt of the needle 250 with respect to the needle holder 240 is the tilt mechanism.

In the present embodiment, the cross section (cross section orthogonal to the center line O) of the protrusion 254 is circular, and the inner peripheral surface of the needle holder 240 and the protrusion 254 of the needle 250 are in point contact with each other at the contact point P when viewed in the cross section (FIG. 9), but the contact point P is continuous at 360 degrees in the circumferential direction of the needle 250 and is in line contact with a ring-shaped tangent line L when viewed three-dimensionally. The protrusion 254 of the needle 250 is implemented not to come into surface contact with the inner peripheral surface of the needle holder 240 even when the needle 250 is tilted with respect to the needle holder 240. A plane including the ring-shaped tangent line L is perpendicular to the center line of the needle 250. In particular, in the configuration shown in FIG. 9, the outer peripheral surface of the protrusion 254 is formed by a spherical surface having a diameter corresponding to that of the inner peripheral surface of the needle holder 240, which is a sliding counterpart, or a curved surface having a radius of curvature close thereto, and the needle 250 is tiltable with respect to the needle holder 240 while maintaining a state in which the protrusion 254 is in contact with the inner peripheral surface of the needle holder 240 to some extent.

The protrusion 254 has a predetermined length in the axial direction, and includes a first region R1 on a distal end side (lower side) of the needle 250 and a second region R2 on a base end side (upper side) of the needle 250 across the contact point P (tangent line L) as shown in FIG. 11. As described above, the outer peripheral surface of the protrusion 254 (both the first region R1 and the second region R2) is a spherical surface or a curved surface having a radius of curvature close to the spherical surface, and in a cross section including the center line O, in both the first region R1 and the second region R2, the gap between the outer peripheral surface of the protrusion 254 and the inner peripheral surface of the needle holder 240 monotonically increases as the distance from the contact point P in the axial direction increases. In the present embodiment, the radii of curvature of the outer peripheral surfaces of the first region R1 and the second region R2 are the same, and may be different. For example, when the diameter of the main body portion 253 of the needle 250 is about 4 mm, the radius of curvature of the outer peripheral surface of the protrusion 254 can be 7, 8 mm as an example.

The length of the first region R1 in the axial direction of the needle 250 is shorter than the length of the second region R2. Therefore, a maximum distance (maximum gap) d2 between the outer peripheral surface of the second region R2 and the inner peripheral surface of the needle holder 240 is larger than a maximum distance (maximum gap) d1 between the outer peripheral surface of the first region R1 and the inner peripheral surface of the needle holder 240. A maximum distance d1 between the first region R1 and the inner peripheral surface of the needle holder 240 (that is, a gap between an outer edge of a distal end surface of the protrusion 254 and the inner peripheral surface of the needle holder 240) is smaller than a wire diameter d3 of the coil spring 255 (diameter of the wire of the coil spring 255).

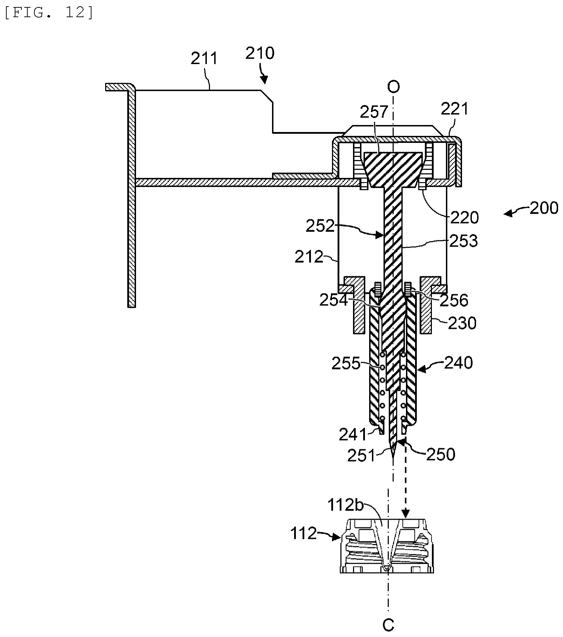

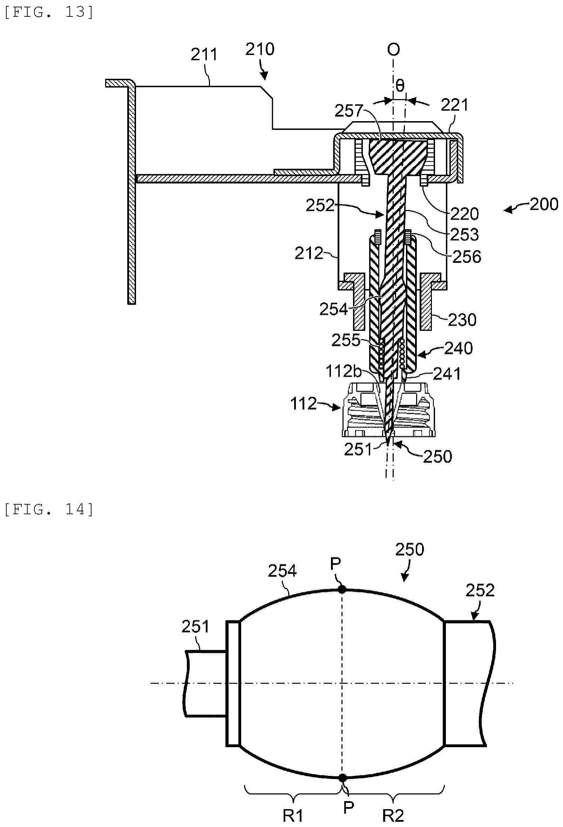

FIGS. 12 and 13 are diagrams of a state in which the tilt mechanism functions. When the reagent bottle 10 is opened, if the center lines O and C of the needle holder 240 and the reagent bottle 10 coincide with each other, the cut 112a naturally enters the center of the lid 112. In addition, as described above, even when the center lines O and C do not coincide with each other, if the distal end portion 241 of the needle holder 240 is not shifted from an upper opening of the recess 112b of the lid 112 (if the entire distal end portion 241 is accommodated in the upper opening of the recess 112b in a plan view), the alignment mechanism functions to shift the needle 250 together with the needle holder 240, and the cut 112a is formed at the center of the lid 112.

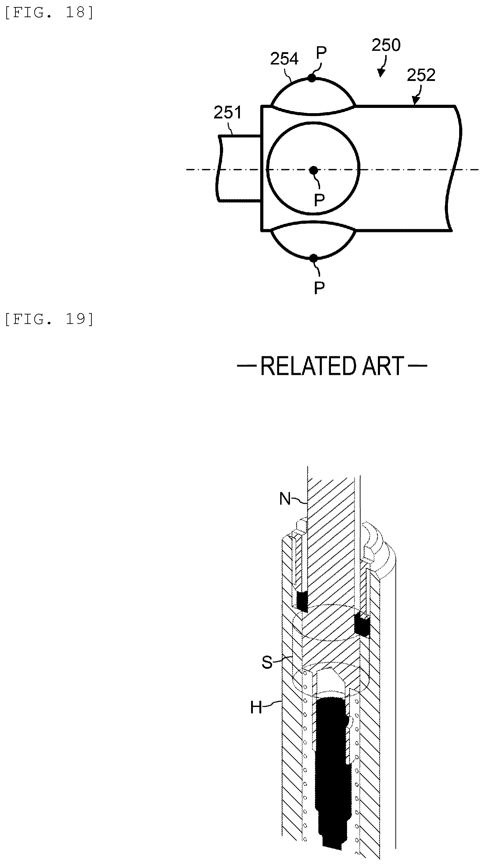

However, depending on variations in the shape and the installation state of the reagent bottle 10, manufacturing errors of components of the automatic analyzer and the reagent bottle 10, and the like, a trajectory of the distal end portion 241 of the needle holder 240 may be shifted from the center of the upper opening of the recess 112b of the lid 112 (the entire distal end portion 241 may not fit in the upper opening of the recess 112b in a plan view) as indicated by a dotted arrow in FIG. 12. In this case, when the needle holder 240 is lowered, as shown in FIG. 13, it is assumed that the distal end portion 241 approaches the edge portion of the recess 112b of the lid 112, the distal end portion 241 gets caught on the upper surface (upward surface excluding the recess 112b) of the lid 112, and the alignment mechanism of the needle holder 240 does not function. In such an example, if the needle N is vertically pushed out from a needle holder H in a state in which the tilt mechanism of the needle N is not provided as in the comparative example shown in FIG. 19 (the outer peripheral surface of the protrusion of the needle N has a cylindrical shape and the needle holder H and the needle N are in surface contact with each other on the cylindrical surface S) and the center line of the reagent bottle 10 and the center line of the needle holder H are shifted from each other, the cut 112a may be formed at a position (for example, an inclined surface of the recess 112b) shifted from the center of the lid 112 beyond an allowable range.

On the other hand, in the present embodiment, since the needle 250 is tiltable with respect to the needle holder 240 by the tilt mechanism, even in a state in which the centers of the needle holder 240 and the lid 112 do not coincide with each other as shown in FIG. 13, unless the trajectory of the distal end of the needle 250 is shifted from the recess 112b of the lid 112, the distal end of the needle 250 is guided by the tilted surface of the recess 112b in the process of pushing out the needle 250 from the needle holder 240, and the needle 250 is tilted with respect to the needle holder 240 at the angle θ corresponding to a deviation amount of the center lines C and O within the movable range allowed by the tilt mechanism. Therefore, as shown in FIG. 13, the distal end of the needle 250 is guided to the bottom of the recess 112b of the lid 112, and the cut 112a is formed at the center position of the lid 112 or at a position within an allowable error from the center.

Even if the tilt mechanism functions and the needle 250 is tilted with respect to the needle holder 240, when the piercing mechanism 200 rises and the needle 250 is pulled out from the lid 112, the protrusion 254 is pressed against the washer 256 by the coil spring 255, and the needle 250 returns to a posture along the center line O.

### -Modification-

The shape of the protrusion 254 shown in FIG. 9 and the like is an example, and the protrusion 254 may have a shape that avoids surface contact with the inner peripheral surface of the needle holder 240. Some representative modifications will be exemplified below.

FIG. 14 is a schematic view showing a main part of a first modification of the needle 250. FIG. 9 shows a configuration in which the first region R1 of the protrusion 254 is shorter than the second region R2. However, in a range in which the coil spring 255 is not caught between the inner peripheral surface of the needle holder 240 and the outer peripheral surface of the protrusion 254, as shown in FIG. 14, the lengths of the first region R1 and the second region R2 in the axial direction may be equal to each other, or the second region R2 may be shorter than the first region R1.

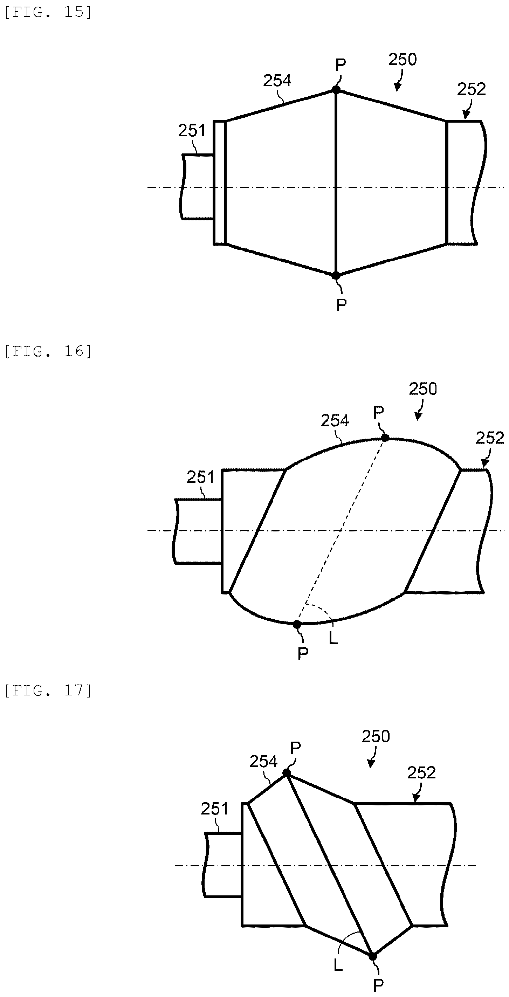

FIG. 15 is a schematic view showing a main part of a second modification of the needle 250. FIG. 9 shows a configuration in which the outer peripheral surface of the protrusion 254 is a curved surface. However, in order to avoid surface contact between the inner peripheral surface of the needle holder 240 and the outer peripheral surface of the protrusion 254, the outer peripheral surface (at least one of the first region R1 and the second region R2) of the protrusion 254 may be a tapered surface (the protrusion 254 has a conical shape) as shown in FIG. 15.

FIG. 16 is a schematic view showing a main part of a third modification of the needle 250. FIG. 9 shows a configuration in which a plane including a ring-shaped tangent line L, which is a set of the inner peripheral surface of the needle holder 240 and the contact point P of the needle 250, is orthogonal to the center line of the needle 250. However, in order to avoid the surface contact between the inner peripheral surface of the needle holder 240 and the outer peripheral surface of the protrusion 254, as shown in FIG. 16, a surface including the ring-shaped tangent line L may be tilted with respect to the center line (a dotted line in FIG. 16) of the needle 250.

FIG. 17 is a schematic view showing a main part of a fourth modification of the needle 250. The example of FIG. 16 has a configuration in which the outer peripheral surface of the protrusion 254 is formed as a curved surface similarly to the example of FIG. 14, but as shown in FIG. 17, the outer peripheral surface of the protrusion 254 in which the surface including the tangent line L is tilted may be a tapered surface similarly to the example of FIG. 15.

FIG. 18 is a schematic view showing a main part of a fifth modification of the needle 250. In each of the above examples, the contact point P between the protrusion 254 and the needle holder 240 is continuous at 360 degrees to form the tangent line L. However, in order to avoid surface contact between the inner peripheral surface of the needle holder 240 and the outer peripheral surface of the protrusion 254, a plurality of protrusions 254 may be provided in the circumferential direction of the needle 250 as shown in FIG. 18, and each protrusion 254 may be in contact with the inner peripheral surface of the needle holder 240 at a single contact point P. In the example of FIG. 18, each protrusion 254 is independent, but adjacent protrusions 254 may be connected to each other. As described above, the needle 250 may be implemented to be in point contact with the inner peripheral surface of the needle holder 240 at the plurality of contact points P intermittently present in the circumferential direction.

### -Application-

As described above, even when the alignment mechanism and the tilt mechanism do not control the reagent autoloader mechanism 100 by, for example, the controller, the needle holder 240 and the needle 250 are guided to the recess 112b of the reagent bottle 10, and the alignment mechanism and the tilt mechanism function following the operation of the piercing mechanism 200. Therefore, it is not necessary to prepare a new program by adding a position sensor or the like for aligning the needle holder 240 and tilting the needle 250. For example, in the existing automatic analysis device adopting the configuration in the related art as shown in FIG. 19, the automatic analysis device according to the present embodiment can be constructed by replacing the needle N or the piercing holder with the needle 250 or the piercing holder 252 according to the present embodiment (if necessary, also replacing a component engaged with the needle N) at least.

In this way, it is possible to construct the automatic analyzer according to the present embodiment from the existing automatic analyzer and to prevent an opening failure of the reagent bottle 10.

### -Effects-

(1) In the present embodiment, the needle holder 240 is brought into contact with the reagent bottle 10, the needle is caused to protrude from the needle holder 240, and the needle pierces the reagent bottle 10 to form the cut 112a. In the configuration, since the needle 250 is in point or line contact with the inner peripheral surface of the needle holder 240, the tilt of the needle 250 with respect to the needle holder 240 is allowed when the needle 250 protrudes from the needle holder 240. Therefore, even when a lowered position of the needle holder 240 is excessively shifted with respect to the center line C of the reagent bottle 10, for example, even when the distal end portion 241 of the needle holder 240 is shifted from the center of the recess 112b of the lid 112 and approaches an upper surface edge of the lid 112, the needle 250 protruding from the needle holder 240 thereafter is tilted with respect to the needle holder 240 along a tilted surface of the recess 112b. As a result, the distal end of the needle 250 is guided to the bottom of the recess 112b, and the cut 112a can be formed at the center of the lid 112.

As described above, according to the present embodiment, even in a state in which the distal end portion 241 of the needle holder 240 is shifted from the center of the recess 112b of the lid 112 of the reagent bottle 10, the cut 112a can be formed in a desired position range of the lid 112 of the reagent bottle 10, specifically, at a position within an allowable error from the center. In addition, by improving the positional accuracy of the cut 112a of the reagent bottle 10, the dispensing of the reagent by the reagent probes 7a and 8a can be quickly and accurately repeated, which can contribute to improving processing capacity of the automatic analyzer.

For example, when the needle N comes into surface contact with the needle holder H as in the configuration shown in FIG. 19, when the needle N is pushed out from the needle holder H after the needle holder H comes into contact with the reagent bottle 10, a frictional resistance of the needle N with respect to the needle holder H is large corresponding to a contact area. In this case, a sliding resistance of the needle N is large, and the needle holder H and the needle N are also likely to wear correspondingly.

In contrast, in the present embodiment, since the needle 250 comes into line or point contact with the needle holder 240, the sliding resistance of the needle 250 can be reduced and the operation can be smoothed, and a mutual wear of the needle holder 240 and the needle 250 can be reduced.

(2) In the present embodiment, the protrusion 254 has the first region R1 on the distal end side of the needle 250 and the second region R2 on the base end side with the contact point P interposed therebetween, and both the first region R1 and the second region R2 are formed such that a gap between the protrusion 254 and the inner peripheral surface of the needle holder 240 monotonically increases as the distance from the contact point P increases. Therefore, in a state in which the needle 250 is tilted with respect to the needle holder 240, it is possible to prevent a portion of the protrusion 254 other than the contact point P from coming into contact with the inner peripheral surface of the needle holder 240 and interfering with the tilt of the needle 250.

(3) Further, since a length of the first region R1 in the axial direction of the needle 250 is shorter than a length of the second region R2, a gap between the distal end (lower end) of the first region R1 and the inner peripheral surface of the needle holder 240 is smaller than a gap between the base end (upper end) of the second region R2 and the inner peripheral surface of the needle holder 240 if the radii of curvature or the taper angles of the first region R1 and the second region R2 are substantially the same. In other words, the gap between the base end (upper end) of the second region R2 and the inner peripheral surface of the needle holder 240 can be made larger than the gap between the distal end (lower end) of the first region R1 and the inner peripheral surface of the needle holder 240. Therefore, on the second region R2 side with respect to the contact point P, the needle 250 (for example, the main body portion 253 of the needle 250) can be made thinner, and there are advantages such as weight reduction of the needle 250 and enlargement of a tiltable angle of the needle 250.

(4) The maximum distance d1 between the inner peripheral surface of the needle holder 240 and the first region R1 is set to be smaller than the wire diameter d3 of the coil spring 255. Accordingly, it is possible to prevent the coil spring 255 from being caught between the inner peripheral surface of the needle holder 240 and the first region R1 when the needle 250 is tilted, and to prevent a decrease in the smoothness of the operation of the needle 250.

(5) As in the examples of FIGS. 9, 14, 16, and 18, when the first region R1 and the second region R2 are curved surfaces, it is possible to prevent the protrusion 254 from being caught on the inner peripheral surface of the needle holder 240 when the needle 250 is tilted or slides.

(6) As in the examples of FIGS. 15 and 17, when the first region R1 and the second region R2 are tapered surfaces, it is possible to minimize the contact of the protrusion 254 with the inner peripheral surface of the needle holder 240 when the needle 250 is tilted or slides.

(7) As in the examples of FIGS. 9 and 14 to 17, in the case of the configuration in which the contact point P between the needle holder 240 and the needle 250 is continuous at 360 degrees in the circumferential direction of the needle 250 to form the ring-shaped tangent line L, the entire circumference of the needle 250 is in contact with the inner peripheral surface of the needle holder 240, so that the posture of the needle 250 is excellent in stability.

(8) When the plane including the ring-shaped tangent line L is perpendicular to the center line of the needle 250 as in the example of FIG. 9 or the like, isotropy can be ensured for the ease of tilt of the needle 250 from a state in which the needle 250 is in contact with the needle holder 240 at the tangent line L.

(9) On the other hand, when the plane including the ring-shaped tangent line L is tilted with respect to the center line of the needle 250 as in the example of FIG. 16 or the like, anisotropy can be ensured for the ease of tilt of the needle 250 from a state in which the needle 250 is in contact with the needle holder 240 at the tangent line L. In this case, for example, when it is necessary to obliquely lower the piercing mechanism 200 for convenience of a device layout, if the needle 250 is set with respect to the needle holder 240 such that the needle 250 is easily tilted in a direction opposite to the tilt of a lowering trajectory of the piercing mechanism 200, the piercing mechanism 200 is obliquely lowered with respect to the reagent bottle 10, but the angle of the needle 250 finally piercing the lid 112 can be brought close to vertical.

(10) As in the example of FIG. 18, a plurality of protrusions 254 are provided in the circumferential direction of the needle 250, and the needle 250 is configured to be in point contact with the inner peripheral surface of the needle holder 240 at a plurality of contact points P, so that the contact resistance of the needle 250 with respect to the needle holder 240 can be further reduced.

(12) The needle 250 has a divided structure of the piercing needle 251 and the piercing holder 252, and the piercing holder 252 is provided with the protrusion 254 while avoiding the piercing needle 251 having a high replacement frequency, so that the piercing holder 252 having the protrusion 254 can be repeatedly used over the replacement of the piercing needle 251. On the other hand, when the wear of the protrusion 254 progresses, it may be necessary to replace the piercing holder 252 even if it is not necessary to replace the piercing needle 251. In such a case, unnecessary replacement of the piercing needle 251 due to the wear of the protrusion 254 can be avoided.

(13) Since the automatic analyzer includes the piercing mechanism 200 that automatically opens the reagent bottle 10 once the reagent bottle 10 is put into, the reagent transport mechanism 101 that transports the reagent bottle 10 to the reagent storage cabinet 9, and the like, the operator does not need to open the reagent bottle 10 by himself or herself and directly store the reagent bottle 10 in the reagent storage cabinet 9. Since the reagent bottle 10 is automatically opened and carried into the reagent storage cabinet 9, a burden on the operator can be reduced.

### -Others-

The invention is not limited to the embodiment described above, and various modifications and applications are possible. The embodiment described above is described in detail for easy understanding of the invention, and the invention is not necessarily limited to those having all the configurations described above.

For example, although the configuration in which the protrusion 254 is integrally formed with the piercing holder 252 is exemplified, the protrusion 254 may be retrofitted to the piercing holder 252. For example, the protrusion 254 may be manufactured as a ring-shaped separate member and may be fitted to the piercing holder 252.

In addition, the configuration example in which the distal end portion of the piercing needle 251 protrudes from the needle holder 240 and the distal end portion of the piercing needle 251 is constantly exposed from the needle holder 240 even in a state in which the protrusion 254 is brought into contact with the washer 256 is described (FIG. 9). However, the piercing needle 251 may be implemented to be extended from the needle holder 240 and penetrate the lid 112 in a state in which the needle holder 240 is in contact with the reagent bottle 10. As long as this function can be ensured, the distal end of the piercing needle 251 may be accommodated inside the needle holder 240 in a state in which the coil spring 255 is maximally extended.

The piercing mechanism 200 may be provided with a plurality of needles 250, and may be implemented to simultaneously insert the cuts 112a into the plurality of lids 112 of the reagent bottle 10 with the plurality of needles 250 for the reagent bottle 10 having the plurality of lids 112.

### Reference Signs List

9: reagent storage cabinet
10: reagent bottle
112a: cut
200: piercing mechanism
240: needle holder
250: needle
251: piercing needle
252: piercing holder
254: protrusion
255: coil spring
C: center line
d1: maximum distance between first region and inner peripheral surface of needle holder
d3: wire diameter of coil spring
L: tangent line
O: center line
P: contact point
R1: first region
R2: second region

## Claims

1. A piercing mechanism comprising:
a needle; and
a tubular needle holder configured to allow the needle to pass therethrough and hold the needle to be slidable in an axial direction, wherein
the needle holder is brought into contact with a reagent bottle put into an automatic analyzer, the needle is caused to protrude from the needle holder, and the needle pierces the reagent bottle to form a cut,
the needle has, on an outer peripheral surface thereof, a protrusion that protrudes outward in a radial direction and that slides on an inner peripheral surface of the needle holder, and
the protrusion has a shape such that the protrusion is in point contact with the inner peripheral surface of the needle holder at a contact point when viewed in a cross section taken along a plane passing through a center line of the needle, and the needle is tiltable with respect to the needle holder.

2. The piercing mechanism according to claim 1, wherein
the protrusion has a first region on a distal end side of the needle and a second region on a base end side of the needle with the contact point sandwiched therebetween, and
the first region and the second region are formed such that a gap between each of the first region and the second region and the inner peripheral surface of the needle holder monotonically increases as a distance from the contact point increases.

3. The piercing mechanism according to claim 2, wherein
a coil spring that pushes the protrusion toward the base end side of the needle is accommodated between the needle holder and the needle, and
a maximum distance between the first region and the inner peripheral surface of the needle holder is smaller than a wire diameter of the coil spring.

4. The piercing mechanism according to claim 2, wherein
a length of the first region is shorter than a length of the second region in the axial direction of the needle.

5. The piercing mechanism according to claim 2, wherein
a maximum distance between the second region and the inner peripheral surface of the needle holder is larger than a maximum distance between the first region and the inner peripheral surface of the needle holder.

6. The piercing mechanism according to claim 2, wherein
the first region and the second region are curved surfaces.

7. The piercing mechanism according to claim 2, wherein
the first region and the second region are tapered surfaces.

8. The piercing mechanism according to claim 1, wherein
the contact point continues 360 degrees in a circumferential direction of the needle to form a ring-shaped tangent line.

9. The piercing mechanism according to claim 8, wherein
a plane including the ring-shaped tangent line is perpendicular to the center line of the needle.

10. The piercing mechanism according to claim 8, wherein
a plane including the ring-shaped tangent line is inclined with respect to the center line of the needle.

11. The piercing mechanism according to claim 1, wherein
a plurality of the protrusions are provided in a circumferential direction of the needle, and the needle is in point contact with the inner peripheral surface of the needle holder at a plurality of contact points.

12. The piercing mechanism according to claim 1, wherein
the needle includes a piercing needle inserted into the reagent bottle, and a piercing holder holding the piercing needle, and
the protrusion is provided on the piercing holder.

13. An automatic analyzer configured to analyze a sample, the automatic analyzer comprising:
a reagent storage cabinet configured to accommodate the reagent bottle; and
the piercing mechanism according to claim 1 configured to form a cut in the reagent bottle carried into the reagent storage cabinet.
